# EUROPEAN PATENT APPLICATION

(11) **EP 4 446 196 A1**
(43) Date of publication of application: **16.10.2024**
(21) Application number: 21966590.8
(22) Date of filing: 10.12.2021
(51) Int. Cl.: B61L 25/06, B61L 23/04, G06T 1/00

(54) **GROUND SIGNAL RECOGNITION DEVICE AND SIGNAL INDICATION RECOGNITION METHOD FOR GROUND SIGNAL**

(71) Applicant: Hitachi, Ltd., Tokyo 100-8280 (JP)
(72) Inventor: SHIMOMURA, Tetsuya, Tokyo 100-8280 (JP); SATO, Kiwamu, Tokyo 100-8280 (JP); KOIKE, Jun, Tokyo 100-8280 (JP); UKAJI, Fumiaki, Tokyo 100-8280 (JP); SATO, Yutaka, Tokyo 100-8280 (JP)
(74) Representative: MERH-IP Matias Erny Reichl Hoffmann Patentanwälte PartG mbB
(86) International application number: PCT/JP2021/045472
(87) International publication number: WO 2023/105742

(57) **Abstract**

In order to provide a ground traffic signal recognition apparatus that improves recognition accuracy of a signal indication content of a ground traffic signal and enhances safety for a railway, the ground traffic signal recognition apparatus includes: a train position detection device configured to detect a position of a train; a ground traffic signal information storage device configured to store an installation position of a ground traffic signal along a railway line along which the train travels and information on the ground traffic signal; an imaging device configured to capture an image of a region in front of the train; and a signal indication recognition device configured to recognize signal indication of the ground traffic signal. The signal indication recognition device recognizes the signal indication of the ground traffic signal present in a traveling direction of the train by using the position of the train output by the train position detection device, the installation position and the information of the ground traffic signal output by the ground traffic signal information storage device, the image captured by the imaging device, and assistance information that assists recognition of the signal indication of the ground traffic signal.

## Description

### Technical Field

The present invention relates to an apparatus and a method for recognizing signal indication of a ground traffic signal.

### Background Art

In a railway field, a need for automatic driving of a train is increasing. In order to implement a train automatic driving system for a railway, it is necessary to provide a function of recognizing signal indication of a ground traffic signal installed along a railway line. More specifically, it is necessary to recognize a signal indication content by performing comparison with an image of a ground traffic signal acquired by a camera or the like based on information such as a position of a train itself and an installation position and a type of the ground traffic signal.

Similar to such a technique for recognizing a signal indication content of a ground traffic signal, for example, PTL 1 discloses a technique that "includes: an imaging device that images outside of a train; a GPS receiver that performs positioning based on a satellite navigation system; a train position detection unit that obtains a train position based on a positioning result of the GPS receiver; a wayside installation apparatus data storage unit that stores data of an apparatus position and an apparatus image related to a wayside installation apparatus installed along the track; and a wayside installation apparatus detection unit that confirms an operation of the wayside installation apparatus by detecting approach of the train position to the apparatus position to load images captured by the imaging device at different approach positions, and detecting the apparatus image from a plurality of images to compare detection results" (paragraph 0008).

### Citation List

### Patent Literature

PTL 1: JP2011-201426A

### Summary of Invention

### Technical Problem

The technique disclosed in PTL 1 is for monitoring an operation state of railway wayside equipment.

For the signal indication recognition of the ground traffic signal, it is necessary to correctly recognize a color of a lamp of the ground traffic signal. In addition, a turned-on state and a turned-off state of a lamp, and which lamp is turned on when a lamp is turned on may change depending on, for example, a position of a preceding train.

In this regard, in the technique disclosed in PTL 1, no consideration is given to a method for correctly recognizing such changing state of the ground traffic signal. Further, when an image captured by, for example, an optical camera is used, a situation where a color of the lamp is unlikely to be correctly imaged may also occur due to environmental conditions (a position of the sun depending on a time zone of day and night, weather such as rain or fog), but such a problem is also not considered in PTL 1.

As a state of the ground traffic signal (the turned-on state and the turned-off state of the lamp, which lamp being turned on when a lamp is turned on, and the like), if the signal indication content cannot be correctly recognized, there is also a possibility of causing a dangerous event such as advancing rashly beyond a stop point.

Therefore, an object of the invention is to provide a technique for improving recognition accuracy of a signal indication content of a ground traffic signal, and recognizing a ground traffic signal for a railway with more enhanced safety.

### Solution to Problem

In order to solve the above-described problems, one of typical ground traffic signal recognition apparatuses of the invention includes: a train position detection device configured to detect a position of a train; a ground traffic signal information storage device configured to store an installation position of a ground traffic signal along a railway line along which the train travels and information on the ground traffic signal; an imaging device configured to capture an image of a region in front of the train; and a signal indication recognition device configured to recognize signal indication of the ground traffic signal, in which the signal indication recognition device recognizes the signal indication of the ground traffic signal present in a traveling direction of the train by using the position of the train output by the train position detection device, the installation position and the information of the ground traffic signal output by the ground traffic signal information storage device, the image captured by the imaging device, and assistance information that assists recognition of the signal indication of the ground traffic signal.

### Advantageous Effects of Invention

According to the invention, when performing signal indication recognition by using an image obtained by imaging a ground traffic signal by an optical camera or the like, even if a color of a lamp cannot be correctly recognized under an influence of environmental conditions, by performing a recognition process based on a signal indication content of a ground traffic signal that has already been passed, it is possible to provide a ground traffic signal recognition apparatus for a railway with higher safety and a signal indication recognition method for the ground traffic signal.

Problems, configurations, and effects other than those described above will be made clear by description given in embodiments for carrying out the following inventions.

### Brief Description of Drawings

[FIG. 1] FIG. 1 is a diagram showing a configuration of a ground traffic signal recognition apparatus according to Embodiment 1 of the invention.
[FIG. 2] FIG. 2 is a diagram showing a relationship between a train and signal indication when the train passes by consecutive ground traffic signals.
[FIG. 3] FIG. 3 is a diagram showing an example of an internal configuration of a signal indication recognition device.
[FIG. 4] FIG. 4 is a diagram showing a configuration of a ground traffic signal recognition apparatus according to Embodiment 2 of the invention.
[FIG. 5] FIG. 5 is a diagram showing a configuration of a ground traffic signal recognition apparatus according to Embodiment 3 of the invention.

### Description of Embodiments

Hereinafter, as a mode for carrying out the invention, Embodiments 1 to 3 according to the invention will be described using the drawings. The invention is not limited to these Embodiments. In addition, in description of the drawings, the same parts are denoted by the same reference numerals.

### [Embodiment 1]

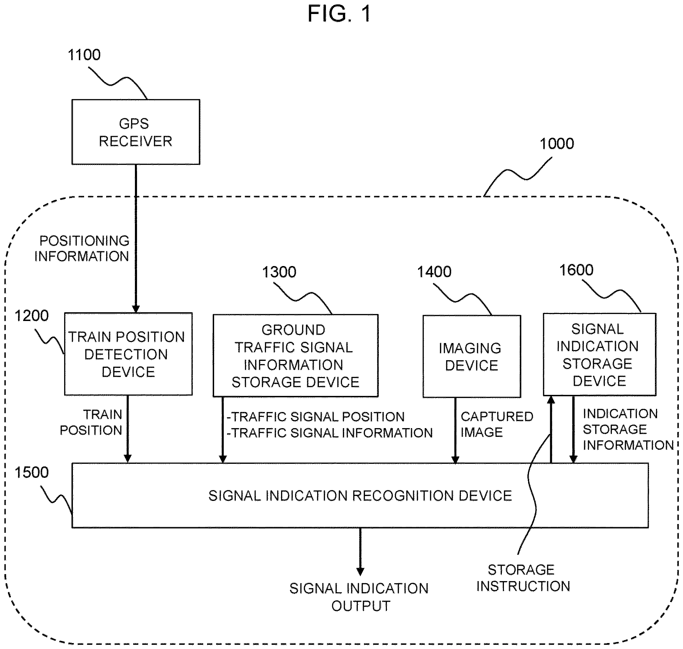

FIG. 1 is a diagram showing a configuration of a ground traffic signal recognition apparatus according to Embodiment 1 of the invention.

A ground traffic signal recognition apparatus 1000 according to Embodiment 1 includes a train position detection device 1200, a ground traffic signal information storage device 1300, an imaging device 1400, a signal indication recognition device 1500, and a signal indication storage device 1600.

Among them, the signal indication recognition device 1500 receives the following four pieces of information as input signals.
(1) A position of a train itself (hereinafter, referred to as a "train position") is received based on positioning information received by a GPS receiver 1100 via the train position detection device 1200.
(2) For a ground traffic signal serving as a detection target, which is installed along a railway line where a train travels, an installation position of the ground traffic signal (hereinafter, referred to as a "traffic signal position") and information indicating a type and a shape of the traffic signal (hereinafter, referred to as "traffic signal information") are received from the ground traffic signal information storage device 1300.
(3) A captured image of the ground traffic signal (hereinafter, referred to as a "captured image") is received from the imaging device 1400.
(4) Signal indication storage information (hereinafter, referred to as "indication storage information") on one or more ground traffic signals that are located in front of the ground traffic signal serving as the detection target and by which the train has already passed is received from the signal indication storage device 1600.

The signal indication recognition device 1500 performs a signal indication recognition process of the ground traffic signal by comparing the traffic signal position based on the train position and the traffic signal information with the captured image.

At this time, for example, in a case where the ground traffic signal is in a backlit state when viewed from the imaging device 1400, it is difficult to capture an image of a correct turned-on state of the ground traffic signal, and the turned-on state may be recognized as erroneous signal indication. This is due to a fact that the signal indication recognition process is performed by only considering the ground traffic signal that is the detection target.

In order to avoid the erroneous recognition, the signal indication recognition device 1500 uses the indication storage information received from the signal indication storage device 1600 as assistance information for the signal indication recognition process, and also takes the assistance information into consideration to perform the signal indication recognition process of the ground traffic signal.

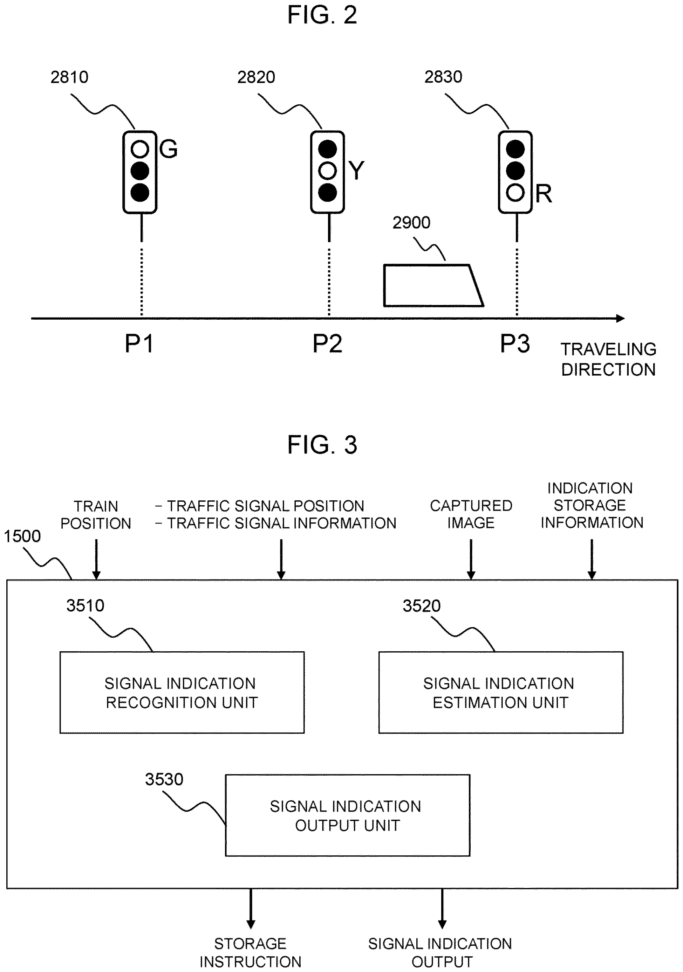

FIG. 2 is a diagram showing an example of a relationship between a train and signal indication when the train passes by consecutive ground traffic signals.

FIG. 2 shows an example in which it is assumed that a train 2900 sequentially passes by ground traffic signals 2810 to 2830 installed at positions P1 to P3 toward a traveling direction, and the ground traffic signal 2810 indicates traveling indication (G; green), the ground traffic signal 2820 indicates attention indication (Y; yellow), and the ground traffic signal 2830 indicates stop indication (R; red).

Here, when the train 2900 is directed to the next ground traffic signal 2830 after passing by the ground traffic signals 2810 and 2820, a target for which the train 2900 performs the signal indication recognition is the ground traffic signal 2830.

When performing the signal indication recognition of the ground traffic signal 2830, for example, due to poor imaging conditions, a color (R in this case) of a lamp cannot be correctly imaged, and may also be erroneously recognized as G in some cases. However, in addition to the ground traffic signal 2830 serving as a recognition target, signal indication results of the already passed ground traffic signals 2810 and 2820 are also recognized. Accordingly, in a case of a route on which signals are indicated in an order of G→Y→R, even if the color of the lamp cannot be correctly imaged, the signal indication can be correctly recognized. In addition, even if R cannot be recognized, it is possible to perform control more safely, such as continuing Y of the signal indication immediately before the train passes by.

FIG. 3 is a diagram showing an example of an internal configuration of the signal indication recognition device 1500.

The signal indication recognition device 1500 includes a signal indication recognition unit 3510, a signal indication estimation unit 3520, and a signal indication output unit 3530.

The signal indication recognition unit 3510 outputs a recognition probability for each signal indication by using the train position, the traffic signal position, the traffic signal information, and the captured image.

The signal indication estimation unit 3520 calculates an estimation probability for each signal indication by using the indication storage information that is the assistance information.

The signal indication output unit 3530 sets a signal indication recognition result calculated based on the recognition probability and the estimation probability for each signal indication as a signal indication output. For example, when a maximum value of the recognition probability is equal to or smaller than a predetermined value, the recognition probability is multiplied by the estimation probability, and a highest result is set as the signal indication recognition result. The calculation of the signal indication recognition is not limited to the calculation method.

As described above, as shown in FIGS. 1, 2, and 3, when performing the signal indication recognition, the signal indication recognition process of also using the signal indication results of the ground traffic signals that the train has already passed by as the assistance information is performed, whereby recognition accuracy can be improved, and a ground traffic signal recognition apparatus for a railway with higher safety can be provided.

In FIGS. 1 and 3, when the ground traffic signal that is the detection target is reached and the signal indication recognition process is completed, the signal indication recognition device 1500 simultaneously outputs a recognition result thereof to the signal indication storage device 1600 as the signal indication together with a storage instruction. Accordingly, a latest signal indication recognition result of the ground traffic signal that is the detection target can be updated in sequence.

### [Embodiment 2]

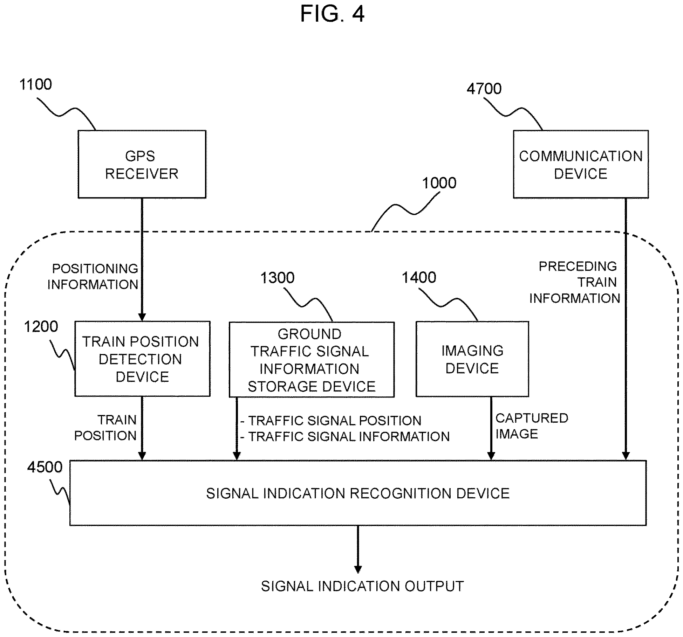

FIG. 4 is a diagram showing a configuration of a ground traffic signal recognition apparatus according to Embodiment 2 of the invention.

The ground traffic signal recognition apparatus 1000 according to Embodiment 2 does not include the signal indication storage device 1600 in Embodiment 1. A signal indication recognition device 4500 in Embodiment 2 receives information on a preceding train (an on-rail position including traveling time, a speed, and the like of the preceding train) via a communication device 4700 mounted on a train.

When performing the signal indication recognition process, the signal indication recognition device 4500 also uses the information on the preceding train (the on-rail position including the traveling time, the speed, and the like of the preceding train) as assistance information in addition to the train position, the traffic signal position, the traffic signal information, and the captured image described in Embodiment 1. Accordingly, even if the signal indication is a result of G or Y in a recognition result of the signal indication based on only an imaging result under an influence such as environmental conditions, by referring to the information on the preceding train (at least the on-rail position including the traveling time of the preceding train) as the assistance information, it is possible to control the train more safely.

The signal indication recognition device 4500 in Embodiment 2 can perform a process similar to the signal indication recognition process described in Embodiment 1 by setting the information on the preceding train used in Embodiment 2 as the assistance information in an internal configuration of the signal indication recognition device 1500 in Embodiment 1 shown in FIG. 3.

### [Embodiment 3]

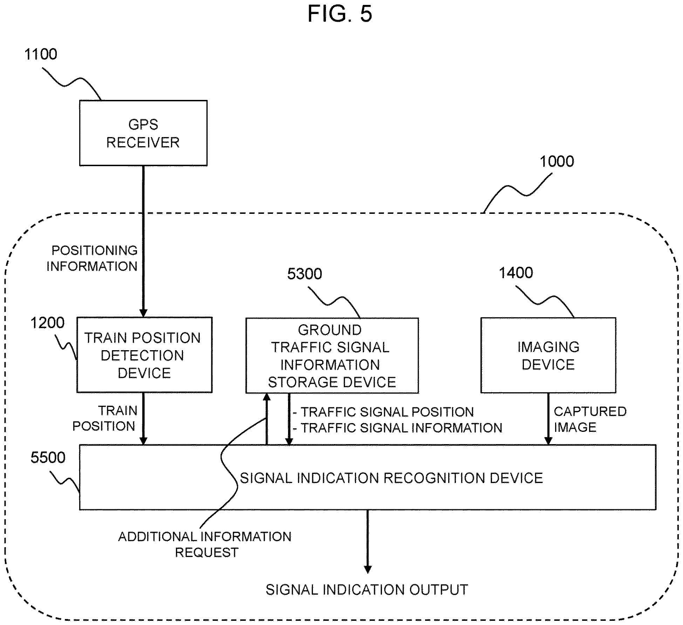

FIG. 5 is a diagram showing a configuration of a ground traffic signal recognition apparatus according to Embodiment 3 of the invention.

The ground traffic signal recognition apparatus 1000 according to Embodiment 3 does not include the signal indication storage device 1600 in Embodiment 1. A signal indication recognition device 5500 in Embodiment 3 has a function of additionally requesting and receiving, as the assistance information, information on one or more ground traffic signals installed farther in a traveling direction than a ground traffic signal to be next signal-recognized from a ground traffic signal information storage device 5300. Here, the requested information on the ground traffic signals is, for example, the traffic signal position and the traffic signal information described in Embodiment 1.

When performing the signal indication recognition process, the signal indication recognition device 5500 also uses the information on one or more ground traffic signals installed farther in the traveling direction than the ground traffic signal to be signal-recognized in addition to the train position, the traffic signal position, the traffic signal information, and the captured image described in Embodiment 1.

When the example shown in FIG. 2 is used, in a case where the ground traffic signal 2810 is a next signal indication recognition target, the signal indication recognition device 5500 additionally requests, as the assistance information, information on the ground traffic signals 2820 and 2830 from the ground traffic signal information storage device 5300. That is, when performing the signal indication recognition of the ground traffic signal 2810, the information on the ground traffic signals 2820 and 2830 installed farther in the traveling direction than the ground traffic signal 2810 is also used to perform the recognition process. Accordingly, even if there is a situation where a signal indication state of the ground traffic signal 2810 cannot be correctly imaged based on an imaging result of the ground traffic signal 2810, recognition accuracy of the signal indication can be improved, and a train can be controlled more safely.

The signal indication recognition device 5500 in Embodiment 3 can perform a process similar to the signal indication recognition process described in Embodiment 1 by setting the information on one or more ground traffic signals installed farther in the traveling direction used in Embodiment 3 as the assistance information in an internal configuration of the signal indication recognition device 1500 in Embodiment 1 shown in FIG. 3.

Embodiments 1 to 3 have been described above, but the invention is not limited to these embodiments, and includes various modifications. For example, the embodiments described above have been described in detail in order to describe the invention in an easy-to-understand manner, and are not necessarily limited to including all the described configurations. In addition, a part of a configuration of a certain embodiment can be replaced with a configuration of another embodiment, and a configuration of another embodiment can also be added to a configuration of a certain embodiment. In addition, it is also possible to add, delete, or replace a part of a configuration of each embodiment with another configuration.

Here, in the embodiments described above, the GPS receiver is used to position the train position, but the invention is not limited thereto. Instead of using the GPS receiver, an inertial measurement unit (IMU), a light detection and ranging (LiDAR), an ultra-wide band (UWB), and the like that can be used for an application of position recognition can be used to perform replacement or used in combination.

Also for the imaging device 1400, an optical camera in a visible light range, an imaging apparatus in a non-visible light range (for example, an infrared camera), or the like can be applied or used in combination.

The embodiments of the invention have been described above, but the invention is not limited to the embodiments described above, and various changes can be made in a range not departing from a gist of the invention.

### Reference Signs List

1000: ground traffic signal recognition apparatus
1100: GPS receiver
1200: train position detection device
1300, 5300: ground traffic signal information storage device
1400: imaging device
1500, 4500, 5500: signal indication recognition device
1600: signal indication storage device
2810, 2820, 2830: ground traffic signal
2900: train
3510: signal indication recognition unit
3520: signal indication estimation unit
3530: signal indication output unit
4700: communication device

## Claims

1. A ground traffic signal recognition apparatus comprising:
a train position detection device configured to detect a position of a train;
a ground traffic signal information storage device configured to store an installation position of a ground traffic signal along a railway line along which the train travels and information on the ground traffic signal;
an imaging device configured to capture an image of a region in front of the train; and
a signal indication recognition device configured to recognize signal indication of the ground traffic signal, wherein
the signal indication recognition device recognizes the signal indication of the ground traffic signal present in a traveling direction of the train by using the position of the train output by the train position detection device, the installation position and the information of the ground traffic signal output by the ground traffic signal information storage device, the image captured by the imaging device, and assistance information that assists recognition of the signal indication of the ground traffic signal.

2. The ground traffic signal recognition apparatus according to claim 1, wherein
the assistance information is signal indication information on one or more of the ground traffic signals by which the train has passed.

3. The ground traffic signal recognition apparatus according to claim 1, wherein
the assistance information is on-rail position information on a train preceding the train.

4. The ground traffic signal recognition apparatus according to claim 1, wherein
the assistance information is the installation position and the information output by the ground traffic signal information storage device and related to one or more ground traffic signals farther in the traveling direction of the train than the ground traffic signal that is a recognition target of the signal indication.

5. The ground traffic signal recognition apparatus according to claim 2, further comprising:
a signal indication storage device configured to store signal indication information on the ground traffic signal, wherein
the signal indication storage device outputs the assistance information, and stores a recognition result of the signal indication of the ground traffic signal that is a recognition target of the signal indication as the signal indication information.

6. The ground traffic signal recognition apparatus according to any one of claims 1 to 5, wherein
the signal indication recognition device calculates, for each signal indication of the ground traffic signal present in the traveling direction of the train, a recognition probability of the signal indication based on the position of the train, the installation position and the information of the ground traffic signal, and the image, and further an estimation probability of the signal indication based on the assistance information, and sets a result having a largest product of the recognition probability and the estimation probability as a recognition result of the signal indication when a maximum value of the recognition probability is equal to or smaller than a predetermined value.

7. A railway vehicle comprising:
the ground traffic signal recognition apparatus according to any one of claims 1 to 5.

8. A signal indication recognition method for a ground traffic signal, the method comprising:
using a position of a train, an installation position of a ground traffic signal along a railway line along which the train travels, information on the ground traffic signal, a captured image of a region in front of the train, and assistance information that assists recognition of signal indication of the ground traffic signal to recognize the signal indication of the ground traffic signal present in a traveling direction of the train.

9. The signal indication recognition method for a ground traffic signal according to claim 8, wherein
the assistance information is signal indication information on one or more of the ground traffic signals by which the train has passed.

10. The signal indication recognition method for a ground traffic signal according to claim 8, wherein
the assistance information is on-rail position information on a train preceding the train.

11. The signal indication recognition method for a ground traffic signal according to claim 8, wherein
the assistance information is the installation position and the information of one or more ground traffic signals farther in the traveling direction of the train than the ground traffic signal that is a recognition target of the signal indication.

12. The signal indication recognition method for a ground traffic signal according to any one of claims 8 to 11, further comprising:
a step of calculating, for each signal indication of the ground traffic signal present in the traveling direction of the train, a recognition probability of the signal indication based on the position of the train, the installation position and the information of the ground traffic signal, and the captured image, and an estimation probability of the signal indication based on the assistance information; and
a step of setting a result having a largest product of the recognition probability and the estimation probability as a recognition result of the signal indication when a maximum value of the recognition probability is equal to or smaller than a predetermined value.
